# EUROPÄISCHE PATENTSCHRIFT

(11) **EP 2 616 649 B1**
(45) Veröffentlichungstag und Bekanntmachung des Hinweises auf die Patenterteilung: **23.03.2016**
(21) Anmeldenummer: 11760462.9
(22) Anmeldetag: 17.09.2011
(51) Int. Cl.: F01N 3/28, F01N 13/18, B01D 53/94, F01N 3/10, F02M 25/00

(54) **Abgasbehandlungseinheit, insbesondere für eine Abgasrückführleitung**
Exhaust gas treatment unit, in particular for an exhaust gas recirculation line
Unité de traitement de gaz d'échappement, en particulier pour une conduite de recyclage de gaz d'échappement

(30) Priorität: 17.09.2010 DE 102010045871
(43) Veröffentlichungstag der Anmeldung: 24.07.2013
(73) Patentinhaber: Continental Automotive GmbH, 30165 Hannover (DE)
(72) Erfinder: KRUSE, Carsten, 53842 Troisdorf (DE); HAESEMANN, Gottfried Wilhelm, 51515 Kürten (DE); KRAVETZ, Bruno, 38179 Lagesbütte (DE)
(86) Internationale Anmeldenummer: PCT/EP2011/066160
(87) Internationale Veröffentlichungsnummer: WO 2012/035163

(56) Entgegenhaltungen:
- DE-A1- 10 357 953
- DE-A1- 19 508 217
- US-A- 4 248 833

## Beschreibung

Gegenstand der vorliegenden Erfindung ist eine Abgasbehandlungseinheit für eine Verbrennungskraftmaschine, insbesondere einen in eine Abgasrückführleitung (AGR-Leitung) eines Kfz-Motors integrierten Katalysatorträgerkörper. Weiterhin wird auch eine Verbrennungskraftmaschine mit einer integrierten Abgasbehandlungseinheit aufgezeigt.

Es ist bekannt, die Abgase einer mobilen Verbrennungskraftmaschine von unerwünschten, gesundheitsbedenklichen und/oder umweltschädlichen Bestandteilen zu reinigen, insbesondere so, dass diese auch die Emissionsanforderungen zukünftiger gesetzlicher Bestimmungen erfüllen. Hierfür sind unter anderem auch Nachrüstsysteme zur Behandlung der Abgase erwünscht, so dass eine Anpassung der bestehenden Motorkonzepte an zukünftige Zielvorgaben bei der Abgasreinigung einfach ermöglicht wird. Ebenso existieren stets Bemühungen, die zu diesem Zweck erforderlichen Abgasbehandlungseinheiten besonders effektiv, platzsparend und kostengünstig im Kraftfahrzeug zu integrieren.

Eine Möglichkeit, diesen Bedingungen zu entsprechen, ist beispielsweise die Bereitstellung eines so genannten motornahen Katalysators, der in unmittelbarer Nähe zur Verbrennungskraftmaschine und ggf. sogar teilweise in einen Motorauslass und/oder einen Krümmer-Eingang positioniert sind. Ein Beispiel für einen solchen Katalysatorträgerkörper für einen motornahen Einbau geht aus der EP-B1-1009924 hervor.

Regelmäßig werden solche Abgasbehandlungseinheiten in die abgasführenden Leitungen eingeführt und durch außenliegende Befestigungsmittel, wie z. B. einen Flansch und/oder einen Kragen, mit Konstruktionselementen (z. B. Schraubverbindungen) und/oder Schweißnähten mit der Verbrennungskraftmaschine fest und/oder der Abgasleitung (dem Krümmer) verbunden und positioniert. Die Herstellung eines solchen Flansches/Kragens ist allerdings aufwendig, so dass hier gerade im Hinblick auf die Serienfertigung beachtliche Kosten anfallen. Die Druckschrift DE 103 57 953 A1 zeigt eine Abgasbehandlungseinheit, aufweisend einen im Wesentlichen zylindrischen Abgasbehandlungskörper mit einer Hauptachse und einen an der Abgasbehandlungseinheit angeordneten selbsthemmenden Schiebesitz als Verbindungsmittel.

Ausgehend davon liegt der Erfindung die Aufgabe zugrunde, eine Abgasbehandlungseinheit vorzuschlagen, die die mit Bezug auf den Stand der Technik angeführten Probleme wenigstens teilweise löst. Insbesondere soll eine platzsparende und sichere Integration einer Abgasbehandlungseinheit in der Nähe der Verbrennungskraftmaschine ermöglicht werden. Außerdem soll auch erreicht werden, dass die Abgasbehandlungseinheit kostengünstig hergestellt und einfach montiert werden kann.

Die Aufgaben werden gelöst durch eine Abgasbehandlungseinheit mit den Merkmalen des Patentanspruchs 1 und einer Verbrennungskraftmaschine gemäß den Merkmalen des Patentanspruchs 5. Vorteilhafte Ausgestaltungen der Erfindung sind in den abhängig formulierten Patentansprüchen angegeben. Die Beschreibung, insbesondere im Zusammenhang mit den Figuren, erläutert die Erfindung weiter und führt ergänzende Ausführungsbeispiele der Erfindung an.

Die erfindungsgemäße Abgasbehandlungseinheit weist einen im Wesentlichen zylindrischen Abgasbehandlungskörper mit einer Hauptachse, einem Gehäuse und ein zumindest einer Öffnungsseite der Abgasbehandlungseinheit zumindest das folgende Verbindungsmittel auf: eine abgesetzte Quetschzone, die die Aufgabe des kraftschlüssigen Verbindens mit einer abgasführenden Leitung übernimmt und die derart abgesetzt ist, dass kein oder nur ein geringer Verformungseinfluss auf den Abgasbehandlungskörper und demnach praktisch nur bei einem Abschnitt des Gehäuses stattfinden kann, wobei die Quetschzone gegenüber dem Rest der Abgasbehandlungseinheit ein Übermaß zum Bilden einer Presspassung aufweist, wobei die Quetschzone so gestaltet ist, dass sich diese nach innen verformt, wobei die Quetschzone sowohl elastischer als auch plastischer Verformung unterliegt, und wobei weiterhin die Quetschzone in einem axialen Abschnitt des Gehäuses gebildet ist, der nicht mit dem Abgasbehandlungskörper gefüllt ist.

Die Abgasbehandlungseinheit stellt im Wesentlichen eine Baueinheit, als Zusatzsystem und/oder Nachrüstsystem, dar, mit der die folgenden Funktionen realisiert werden: Behandlung des Abgases und dauerhafte, ortsfeste Positionierung in einer abgasführenden Leitung. Dabei wird die Funktion der Positionierung insbesondere durch ein (bevorzugt einteiliges) Gehäuse gebildet. Das Gehäuse bildet z. B. eine Art (metallischer) Mantelbereich, der (mindestens) einen für das Abgas durchströmbaren Abgasbehandlungskörper aufnimmt und diesem damit auch seine Formstabilität gibt. Hierzu kann insbesondere eine Lötverbindung und/oder Schweißverbindung hin zu dem Abgasbehandlungskörper ausgeführt sein. Damit ist insbesondere eine direkte bzw. unmittelbare Verbindung von Gehäuse und Abgasbehandlungskörper (ohne z. B. ein Zwischengehäuse, Lagermatten oder dergleichen) realisiert.

Der Abgasbehandlungskörper ist insbesondere ein katalytisch wirksamer Körper. Dieser kann insbesondere aus gewickelten und/oder gewundenen metallischen Blechfolien aufgebaut sein, die glatt und/oder strukturiert sein können. Die Anordnung der Blechfolien erfolgt dabei bevorzugt so, dass ein Wabenkörper mit einer Vielzahl (im Wesentlichen zueinander parallel verlaufender) Kanäle gebildet ist. Weiterhin weisen diese Folien eine katalytisch wirksame Beschichtung auf, insbesondere umfassen die Folien sogenannten Washcoat und darauf platziertes katalytisch aktives Material. Bevorzugt ist, dass die Blechfolien direkt mit dem Gehäuse in Kontakt sind und/oder mit diesem verbunden sind.

Der Abgasbehandlungskörper und das ihn umschließende Gehäuse weisen bevorzugt im Wesentlichen eine zylindrische Form auf. Damit ist insbesondere gemeint, dass die Querschnittsform normal zur Hauptachse des Abgasbehandlungskörpers im Wesentlichen zylindrisch ist. In vielen Fällen sind abgasführende Leitungen zylindrisch. Selbstverständlich kann diese Grundform des Abgasbehandlungskörpers auch an andere Querschnitte der abgasführenden Leitung angepasst sein. Der Begriff "im Wesentlichen" zylindrisch umfasst also auch übliche Querschnitte der abgasführenden Leitungen wie z. B. ein Oval, ein Polygon oder dergleichen. Maßgeblich hierbei ist die überwiegend gleichmäßige Beabstandung zur Wand der jeweils abgasführenden Leitung.

Die Hauptachse des Abgasbehandlungskörpers ist in der Regel deckungsgleich mit der Hauptachse einer jeweiligen abgasführenden Leitung. Hierbei ist nicht gemeint, dass die Hauptachse unbedingt deckungsgleich mit der Richtung der Filterkanäle des Abgasbehandlungskörpers sein muss. Vielmehr ist damit gemeint, dass die Eintrittsrichtung des Abgases und auch die Austrittsrichtung des Abgases im Wesentlichen normal zu dieser Hauptachse gleich sind. Oftmals ist die Hauptachse deckungsgleich mit der Normalen auf dem geometrischen Schwerpunkt der Eintritts- und/oder Austrittsfläche des Abgasbehandlungskörpers.

Die Quetschzone der Abgasbehandlungseinheit übernimmt die Aufgabe des kraftschlüssigen Verbindens mit einer abgasführenden Leitung. Die Quetschzone wird bevorzugt (nur) mit dem Gehäuse gebildet, so dass dieser axiale Abschnitt des Gehäuses nicht oder zumindest nicht vollständig mit dem Abgasbehandlungskörper gefüllt ist. Die Quetschzone weist gegenüber dem Rest der Abgasbehandlungseinheit insbesondere ein Übermaß auf. Dieses Übermaß ist dazu geeignet, eine kraftschlüssige Anlage bzw. Presspassung mit der abgasführenden Leitung zu bilden. Die Quetschzone ist insbesondere so gestaltet, dass sich diese (radial) nach innen (ggf. auch in Richtung des Abgasbehandlungskörpers) verformt, bevorzugt ohne den Abgasbehandlungskörpers selbst (signifikant) zu verformen. Die Quetschzone unterliogt Bildung dieser Presspassung sowohl elastischer als auch plastischer Verformung. Hierbei ist vor allem die plastische Verformung bevorzugt. Bei der plastischen Verformung wird sichergestellt, dass die Reibkraft resultierend aus dem elastischen Verformungsanteil, der mit der plastischen Verformung einhergeht, maximal ist. Die Quetschzone kann aber auch so ausgeführt sein, dass eine defekte Abgabehandlungseinheit und/oder eine funktionstüchtige Abgasbehandlungseinheit, eingebaut in einem schadhaften Bauelement, mit geringem Aufwand und ohne Beschädigung der umliegenden Bauelemente und/oder der Abgasbehandlungseinheit wieder entnommen werden kann.

Die Quetschzone kann in verschiedenen Ausführungsformen vorliegen. Insbesondere kann die Quetschzone als geschlitzter Federring, als geschlossener Temperatur-Dehnring und/oder als Verlängerung des Gehäuses mit einem von der Grundform abweichenden Querschnitt ausgeführt sein. Auch kann die Quetschzone als zumindest eine Ausbeulung des (insbesondere einteiligen) Gehäuses ausgeführt sein. Die Ausbeulung kann derart ausgeführt sein, dass eine aus dem Einbau resultierende Verformung der Ausbeulung nur geringe bis keine Verformungen des übrigen Gehäuses verursacht. D.h. insbesondere der Teil des Gehäuses, der mit dem Abgasbehandlungskörper (radial und/oder axial benachbart) in Kontakt steht, wird nur gering bis gar nicht verformt. Eine solche Ausbeulung kann insbesondere mit einem Abstand von bis zu 20 mm [Millimeter] ausgeführt sein, wobei bevorzugt mindestens 2 und ganz besonders bevorzugt maximal 5 Ausbeulungen auf einem Umfang des Gehäuses angeordnet sind.

Die Quetschzone ist von dem Abgasbehandlungskörper abgesetzt. "Abgesetzt" bedeutet hierbei, dass kein oder nur ein geringer Verformungseinfluss auf den Abgasbehandlungskörper und demnach praktisch nur bei einem Abschnitt des Gehäuses stattfinden kann. Dies kann insbesondere dadurch erreicht werden, dass ein Absatz, eine Querschnittsänderung, eine Querschnittsformänderung und/oder dergleichen zwischen der Quetschzone und dem Abgasbehandlungskörper vorliegt. Ein solcher Absatz kann in Form einer Stufe, eines Knicks, einer Kurve (in einem Längsschnitt durch das Gehäuse) und/oder einer stoffschlüssigen Verbindung, das heißt, einer Schweißverbindung und/oder Lotverbindung, ausgeführt sein.

Das zumindest eine Verbindungsmittel befindet sich zudem an zumindest einer Öffnungsseite der Abgasbehandlungseinheit. Hierbei ist insbesondere der sich an eine Öffnungsseite anschließende Abschnitt des Gehäuses gemeint. Bevorzugt ist, dass nur eine (einzelne) Quetschzonen oder Formstruktur vorgesehen ist, die sich zudem insbesondere nur über einen begrenzten Abschnitt der Abgasbehandlungseinheit, ausgehend von der Öffnungsseite, erstreckt. Mit diesem Verbindungsmittel kann also insbesondere in Montagerichtung und/oder Demontagerichtung ein vorgelagerter und/oder nachgelagerter, kraftschlüssiger und/oder formschlüssiger Verbund hin zur abgasführenden Leitung gebildet werden.

In einer weiteren vorteilhaften Ausbildung der Abgasbehandlungseinheit weist das zumindest eine Verbindungsmittel einen von dem im Wesentlichen zylindrischen Abgasbehandlungskörper abweichenden Querschnitt auf. Dieser Querschnitt kann insbesondere so ausgeführt sein, dass er eine geeignete Verformung mit Folge einer kraftschlüssigen Verbindung mit einer abgasführenden Leitung bewirkt. Hierbei kann der Querschnitt mitunter nur stellenweise (lokal) von der Form des zylindrischen Abgasbehandlungskörpers abweichen, um so den Einfluss der mechanischen Verformung auf den Abgasbehandlungskörper weiter zu minimieren. Auch kann der Querschnitt so von der Form des Abgasbehandlungskörpers abweichen, dass eine einfache Montage unterstützt wird. Hierbei ist insbesondere an solche Querschnitte zu denken, die den Einsatz von Werkzeugen erlauben, welche ein Einführen bei gleichzeitigem Vorspannen z. B. der Quetschzone unterstützen. Weiterhin kann der Querschnitt Faltungen und ähnlich wirkende Federmittel über den Umfang aufweisen, die eine elastische Wirkung z. B. der Quetschzone unterstützen.

Grundsätzlich sei hier angeführt, dass die Querschnitte der Abgasbehandlungseinheit im Bereich des Abgasbehandlungskörpers und im Bereich des zumindest einen Verbindungsmittels (im Hinblick auf den Umfang und/oder die Fläche und/oder Überdeckung) um mindestens 2 % abweichen können, insbesondere um mindestens 5 %. Hierbei ist insbesondere gemeint, dass der Querschnitt im Bereich des zumindest einen Verbindungsmittels unrund und/oder exzentrisch gegenüber dem Querschnitt im Bereich des Abgasbehandlungskörpers geformt ist. Hierbei kommen insbesondere Kombinationen radial (wenigstens teilweise) überstehender Querschnitte (Kreisform, Oval, Polygon, Race-Track-Form, etc.) in Betracht.

In einer weiteren vorteilhaften Ausbildung der erfindungsgemäßen Abgasbehandlungseinheit ist das zumindest eine Verbindungsmittel gegenüber der Hauptachse exzentrisch angeordnet. Hierdurch kann insbesondere bewirkt werden, dass die Abgasbehandlungseinheit teilweise spielfrei an der abgasführenden Leitung anliegt. Dies unterstützt die Stabilität erheblich. Auch kann dadurch erreicht werden, dass die Fläche, die kraftschlüssig wirksam ist, sich weiter über den Abschnitt der Abgasbehandlungseinheit erstreckt. Außerdem können so auch über den Umfang der Abgasbehandlungseinheit Bereiche geschaffen werden, die ggf. für eine Demontage einen Eingriff mit entsprechenden Werkzeugen zulassen.

In einer weiteren vorteilhaften Ausführung der Abgasbehandlungseinheit hat die Abgasbehandlungseinheit ein Gehäuse und das Gehäuse und das zumindest eine Verbindungsmittel sind einstückig ausgeführt. Hierdurch können Nachteile in Verbindung mit Fügeverbindungen, Nacharbeiten und Schwankungen im Materialverhalten zwischen dem zumindest einen Verbindungsmittel und der Abgasbehandlungseinheit (bzw. dem Gehäuse) vermieden werden. Weiterhin ist vorteilhaft, dass somit kein zusätzliches Bauelement nötig ist. Lediglich eine Verlängerung des Gehäuses bzw. unter Umständen eine umformende Weiterbearbeitung des Gehäuses im Bereich des gewünschten Verbindungsmittels ist dann erforderlich.

In einer weiteren vorteilhaften Ausbildung der erfindungsgemäßen Abgasbehandlungseinheit geht die Abgasbehandlungseinheit fließend in das zumindest eine Verbindungsmittel über. Hiermit ist insbesondere gemeint, dass das Gehäuse über die gesamte Erstreckung der Abgasbehandlungseinheit inklusive des zumindest einen Verbindungsmittels eine kontinuierliche Neigung (z. B. eine Erweiterung) bildet. Hierbei kann das Gehäuse (teilweise) die Form eines Kegels und/oder eines einseitigen Konus haben, und/oder bauchig und/oder nach außen gebogen ausgeführt sein. Dies kann insbesondere vorteilhaft sein, wenn dadurch das Einführen der Abgasbehandlungseinheit mit Quetschzone und/oder Formstruktur durch den fließenden Übergang zur Quetschzone und/oder Formstruktur unterstützt wird. Zur Vermeidung der Verformung des innen angeordneten Abgasbehandlungskörpers können sowohl Deformationsabschnitte als auch Entlastungsschlitze vorgesehen sein. Insbesondere vorteilhaft ist, wenn der Abgasbehandlungskörper keine Verbindung mit den Teilen der Mantelfläche (bzw. des Gehäuses) aufweist, die fließend in die Quetschzone oder Formstruktur übergehen. Damit ist insbesondere gemeint, dass die Bereiche des Gehäuses der Abgasbehandlungseinheit, die mit dem Abgasbehandlungskörper in Verbindung stehen, über die gesamte Erstreckung der Abgasbehandlungseinheit im Wesentlichen keine Veränderung des Querschnitts aufweisen.

Einem weiteren Aspekt der Erfindung folgend wird eine Verbrennungskraftmaschine mit zumindest einer Abgasbehandlungseinheit vorgeschlagen, wobei die Verbrennungskraftmaschine zumindest eine abgasführende Leitung aufweist und zumindest eine Abgasbehandlungseinheit in der zumindest einen abgasführenden Leitung vollständig eingeführt ist.

Die Verbrennungskraftmaschine ist als eine konventionelle Verbrennungskraftmaschine ausgelegt und ist für den Betrieb mit Benzin oder Diesel-Kraftstoff konstruiert. Die Verbrennungskraftmaschine kann daher ein üblicher Hubkolbenmotor bzw. Tauchkolbenmotor (z. B. Otto-Kraftmaschine oder Diesel-Kraftmaschine), Drehkolbenmotor oder Kreiskolbenmotor (Wankel-Motor) sein. Auch ist der Betrieb mit anderen Verbrennungskraftmaschinen denkbar, die auf einem geschlossenen Kreisprozess beruhen. Die Verbrennungskraftmaschine ist dabei bevorzugt Teil eines Kraftfahrzeugs, insbesondere eines Automobils.

Für die Austreibung des verbrannten Gemischs aus der Verbrennungskraftmaschine sind Abgasleitungsbohrungen vorgesehen. Zudem sind Verbrennungskraftmaschinen bekannt, bei denen bedarfsgerecht ein Teil des Abgases (unbehandelt) wieder zurückgeführt wird (Abgasrückführleitung bzw. AGR-Leitung oder auch EGR-Leitung (exhaust gas recirculation)). Somit umfasst der Begriff "abgasführende Leitung" neben den üblichen Abgasleitungsbohrungen ebenfalls die in der Verbrennungskraftmaschine vorgesehenen Bohrungen für die Ansaugleitung. Wesentlich ist hierbei insbesondere, dass dies (zumindest teilweise und/oder zeitweise) von Abgas durchströmte, in die Verbrennungskraftmaschine integrierte bzw. von dem Motorgehäuse gebildete und/oder eingefasste Leitungen (bzw. Bohrungen, etc.) sind. Damit sind diese Leitungen besonders stabil und können ein entsprechendes Widerlager für eine Quetschzone der Abgasbehandlungseinheit darstellen. Insbesondere ist hier ein Leitungsabschnitt einer abgasrückführenden Leitung gemeint, der sich durch einen Teil der Verbrennungskraftmaschine erstreckt, insbesondere nach Art einer Bohrung durch den Zylinderkopf. Insbesondere liegt der betreffende Leitungsabschnitt in Strömungsrichtung des Abgases vor einer möglichen Abgaskühlvorrichtung für die Aufbereitung der Abgase z. B. zur Rückführung in zumindest einen Brennraum der Verbrennungskraftmaschine. Insbesondere ist die abgasführende Leitung gegenüber dem Gehäuse der Abgasbehandlungseinheit insgesamt oder nur gegenüber der Quetschzonen steif ausgeführt.

Die Abgasbehandlungseinheit ist insbesondere so ausgeführt, dass sie vollständig durch die abgasführende Leitung aufgenommen ist. Mit anderen Worten heißt das insbesondere auch, dass die Abgasbehandlungseinheit vollständig von der abgasführenden Leitung umgeben ist, ohne dass diese die abgasführenden Leitung unterbricht oder durchdringt, wobei die abgasführende Leitung bevorzugt im gesamten Bereich um die Abgasbehandlungseinheit herum einstückig ausgebildet ist und/oder keine in Umfangsrichtung der Abgasbehandlungseinheit verlaufende Unterteilung, Aufnahme, Erweiterung etc. hat. Das bedeutet insbesondere auch, dass keine Bauteile der Abgasbehandlungseinheit aus der abgasführenden Leitung herausragen. Somit steigt zum Einen die Flexibilität der Anordnung der Abgasbehandlungseinheit in einer abgasführenden Leitung, die nicht mehr in Flanschbereiche eingeschränkt ist, und zum Anderen können konstruktive Änderungen, aufwendige Dichtmittel und insbesondere zusätzliche Bauteile der Abgasbehandlungseinheit eingespart werden. Insgesamt sinkt die Anzahl an notwendigen Bau- und Montageschritten.

In einer weiteren vorteilhaften Ausbildung der erfindungsgemäßen Verbrennungskraftmaschine ist die zumindest eine Abgasbehandlungseinheit kraftschlüssig mit der abgasführenden Leitung fest positionierbar. Die Abgasbehandlungseinheit kann dabei insbesondere mittels Übermaß gegenüber der abgasführenden Leitung durch eine Presspassung fest positionierbar sein. Das Übermaß der Abgasbehandlungseinheit kann sowohl bereits vor dem Einbau bei Raumtemperatur vorhanden sein als auch erst im Betriebszustand bei Betriebstemperatur seine ausreichende Kraft entwickeln. Weiterhin kann das Übermaß auch erst nachträglich im Einbau durch ein zusätzliches Bauelement wie einen Temperatur-Dehnring erreicht werden.

In einer vorteilhaften Weiterbildung der Verbrennungskraftmaschine ist die Abgasbehandlungseinheit durch Verstemmen zumindest einseitig fixiert. Hierbei wird die Leitungswand der abgasführenden Leitung an einer Öffnungsseite derartig verformt, dass ein Kraftschluss und Formschluss zwischen der Abgasbehandlungseinheit und der abgasführenden Leitung entsteht. Dieses Mittel zum Fixieren eignet sich insbesondere für Aluminium-Leitungen, beispielsweise Leitungen, die als Bohrung in einen Aluminium-Zylinderkopf eingebracht sind. Auch kann damit eine weitere Fixierung hergestellt werden, insbesondere bei z. B. konischen Bohrungen.

In einer weiteren vorteilhaften Ausführung der erfindungsgemäßen Verbrennungskraftmaschine entspricht zumindest eine der hier vorgesehenen Abgasbehandlungseinheiten der obig beschriebenen erfindungsgemäßen Abgasbehandlungseinheit mit zumindest einem Verbindungsmittel.

Im Rahmen der Erfindung ist ebenfalls ein Kraftfahrzeug beschrieben, das eine erfindungsgemäße Verbrennungskraftmaschine mit zumindest einer erfindungsgemäßen Abgasbehandlungseinheit aufweist.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht begrenzt ist. Die Figuren sind schematisch und benennen gleiche Bauteile mit gleichen Bezugszeichen. Es zeigen:
- Fig. 1:: eine Abgasbehandlungseinheit mit Quetschzone,
- Fig. 2:: den Querschnitt der Abgasbehandlungseinheit aus Fig. 1,
- Fig. 3:: eine weitere Abgasbehandlungseinheit mit exzentrischer Quetschzone und abweichendem Querschnitt,
- Fig. 4:: den Querschnitt der Abgasbehandlungseinheit aus Fig. 3,
- Fig. 5:: eine Abgasbehandlungseinheit mit fließendem Übergang von Abgasbehandlungskörper zur Quetschzone,
- Fig. 6:: einen Querschnitt der Abgasbehandlungseinheit aus Fig. 5,
- Fig. 7:: eine Abgasbehandlungseinheit mit Ausbeulungen an zwei Öffnungsseiten,
- Fig. 8:: einen Querschnitt einer Abgasbehandlungsvorrichtung mit ausgebeulten Verbindungsmitteln,
- Fig. 9:: eine Abgasbehandlungseinheit in einer abgasführenden Leitung mit Verstemmung,
- Fig. 10:: eine nicht erfindungsgemäße Abgasbehandlungseinheit in einer abgasführenden Leitung mit Formstruktur,
- Fig. 11:: ein Kraftfahrzeug mit vier Abgasbehandlungseinheiten in der Ansaugleitung,
- Fig. 12:: eine Abgasbehandlungseinheit in einer Ansaugleitung,
- Fig. 13:: ein Kraftfahrzeug mit vier Abgasbehandlungseinheiten in der Abgasleitung, und
- Fig. 14:: eine Abgasbehandlungseinheit in einer Abgasleitung.

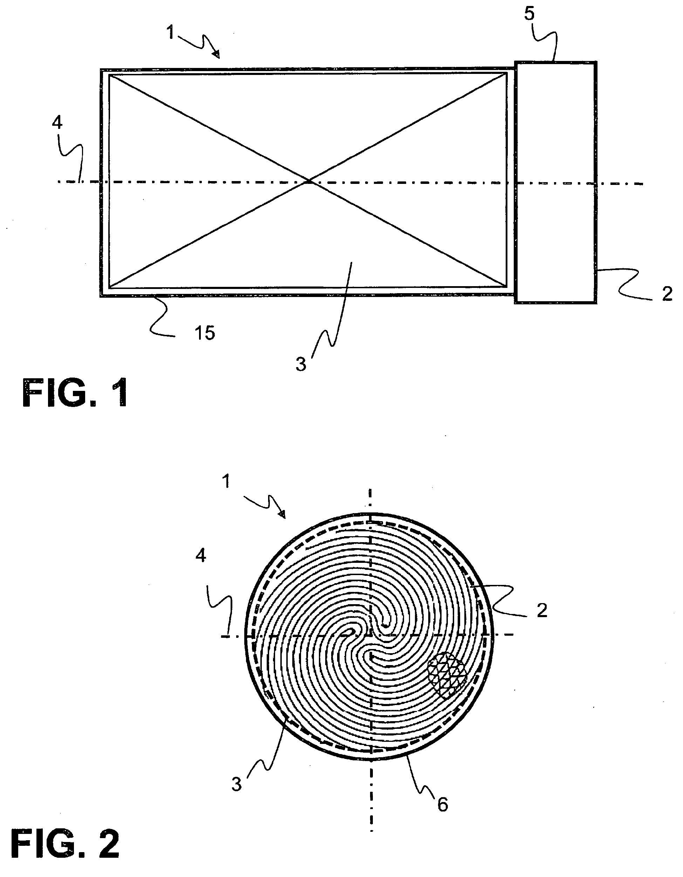

Fig. 1 zeigt eine Abgasbehandlungseinheit 1 mit einem Gehäuse 15 und einem (einzelnen) Abgasbehandlungskörper 3 sowie einer Quetschzone 5 an einer Öffnungsseite 2 und Hauptachse 4. Die Quetschzone 5 ist konzentrisch mit der Hauptachse des Abgasbehandlungskörpers 3 und weist zudem eine Stufe gegenüber dem Abgasbehandlungskörper 3 auf. In Fig. 2 ist in Draufsicht auf die Öffnungsseite 2 die Abgasbehandlungseinheit 1 bzw. der Querschnitt 6 der Quetschzone 5 gegenüber dem Abgasbehandlungskörper 3 aus Fig. 1 gezeigt. Hierbei ist zu erkennen, dass der Querschnitt 6 der Form des Abgasbehandlungskörpers 3 entspricht. Stellvertretend für verschiedene Wabenstrukturen ist hier eine S-förmig gewundene Struktur aus abwechselnd gewellten und glatten Folien dargestellt.

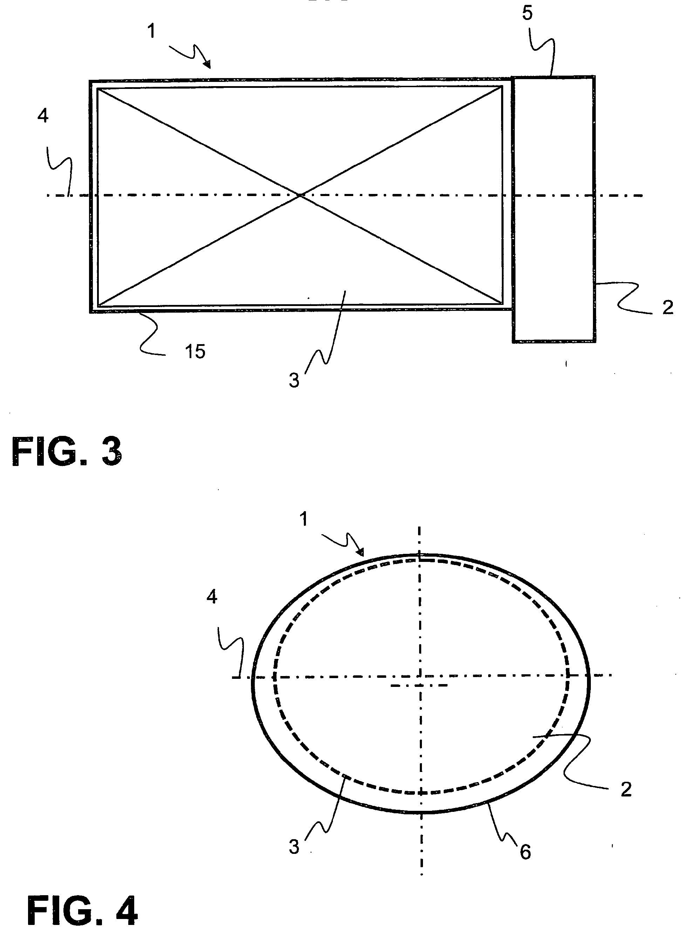

In Fig. 3 ist eine Abgasbehandlungseinheit 1 mit einem Abgasbehandlungskörper 3 und einer Quetschzone 5 gezeigt, die sich an einer Öffnungsseite 2 der Abgasbehandlungseinheit 1 befindet. In dieser Ansicht ist bereits zu erkennen, dass die Quetschzone 5 exzentrisch angeordnet ist.

In Fig. 4 ist wieder in Draufsicht auf die Öffnungsseite 2 die Abgasbehandlungseinheit 1 aus Fig. 3 zu sehen, wobei dargestellt ist, dass der Querschnitt 6 exzentrisch zu der Hauptachse 4 angeordnet ist. Weiterhin ist zu erkennen, dass der Querschnitt 6 von der Form des Abgasbehandlungskörpers 3 abweicht.

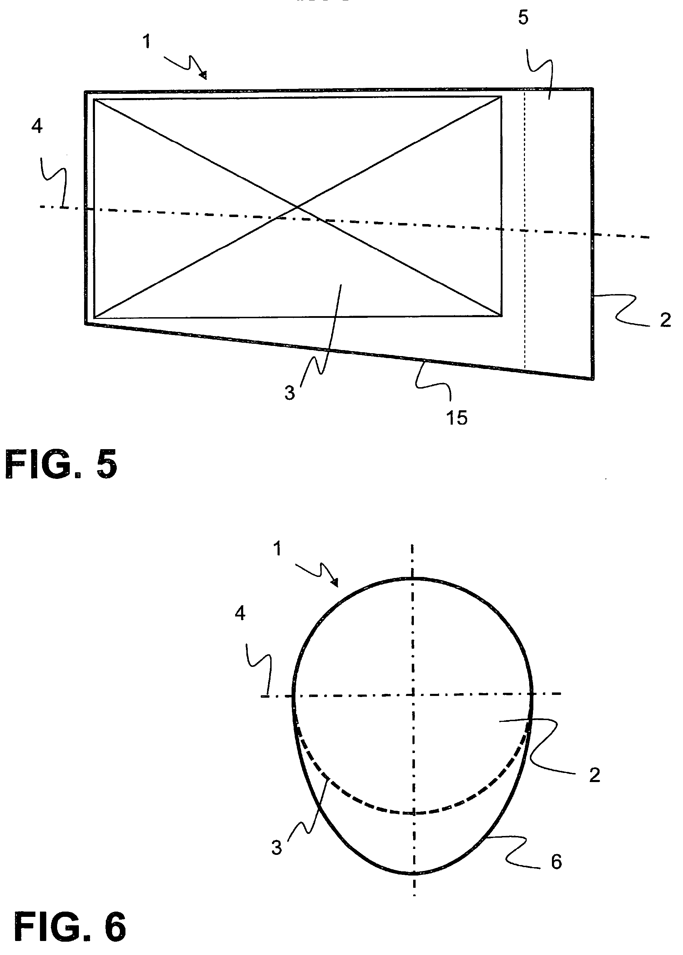

Fig. 5 zeigt eine Abgasbehandlungseinheit 1 mit einem Abgasbehandlungskörper 3 und einer Quetschzone 5 an der Öffnungsseite 2, wobei der Übergang vom Abgasbehandlungskörper 3 zur Quetschzone fließend ist. Lediglich zur Klarstellung ist eine dünne, gestrichelte Linie eingezeichnet, die den Abgasbehandlungskörper 3 von der Quetschzone 5 trennt. Die Hauptachse 4 ist in Fig. 5 geneigt dargestellt, kann aber auch bei einer abweichenden Form des Innenlebens des Abgasbehandlungskörpers 3 in Bezug auf die Darstellung waagerecht eingezeichnet werden.

Fig. 6 zeigt ebenso in Draufsicht auf die Öffnungsseite 2 den Querschnitt 6 der Abgasbehandlungseinheit 1 aus Fig. 5. Hierbei ist zu erkennen, dass der Querschnitt 6 nur teilweise von der Form des Abgasbehandlungskörpers 3 abweicht.

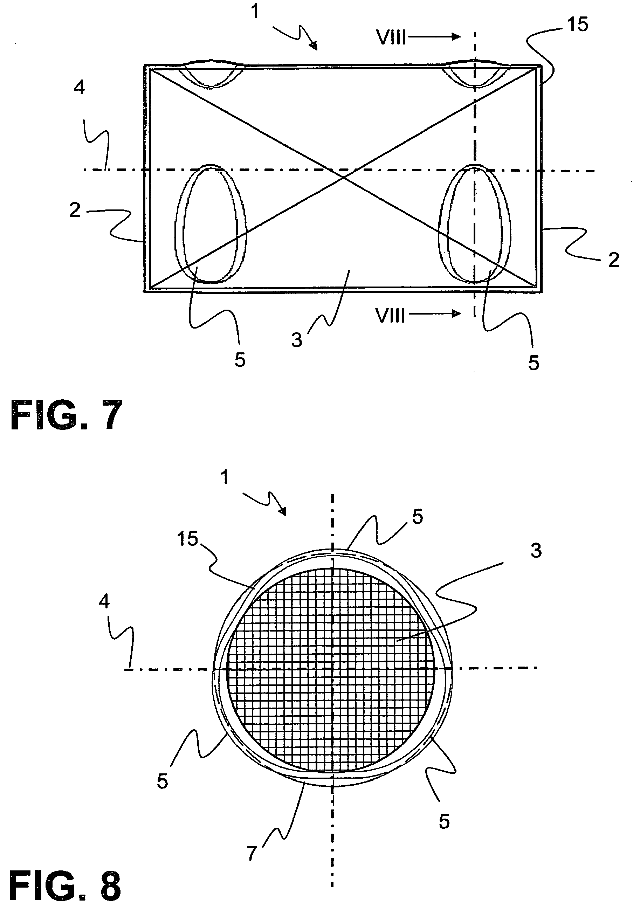

Fig. 7 zeigt eine Abgasbehandlungseinheit 1 mit einem Abgasbehandlungskörper 3 und zwei Quetschzonen 5 an beiden Öffnungsseiten 2, wobei der Übergang vom Abgasbehandlungskörper 3 zur Quetschzone fließend ist. Lediglich zur Klarstellung sind ovale Linien eingezeichnet, die die Erhebung der Quetschzone 5 gegenüber dem Abgasbehandlungskörper 3 andeuten. Über den Umfang der Abgasbehandlungseinheit 1 sind in den beiden Quetschzonen jeweils drei Ausbeulungen eingebracht.

Fig. 8 zeigt beispielsweise den in Fig. 7 dargestellten Schnitt VIII - VIII überlagert zur geplanten Einbausituation in einer abgasführenden Leitung 7. Hierbei ist zu erkennen, dass der Querschnitt 6 über den gesamten Umfang der Abgasbehandlungseinheit 1 von der Form der abgasführenden Leitung 7 (nach innen und außen) abweicht. Wird diese Abgasbehandlungseinheit 1 tatsächlich eingesetzt, verformt sich das Gehäuse 15 im Bereich der Quetschzonen 5, wobei der Abgasbehandlungskörper 3 hiervon nicht wesentlich betroffen ist.

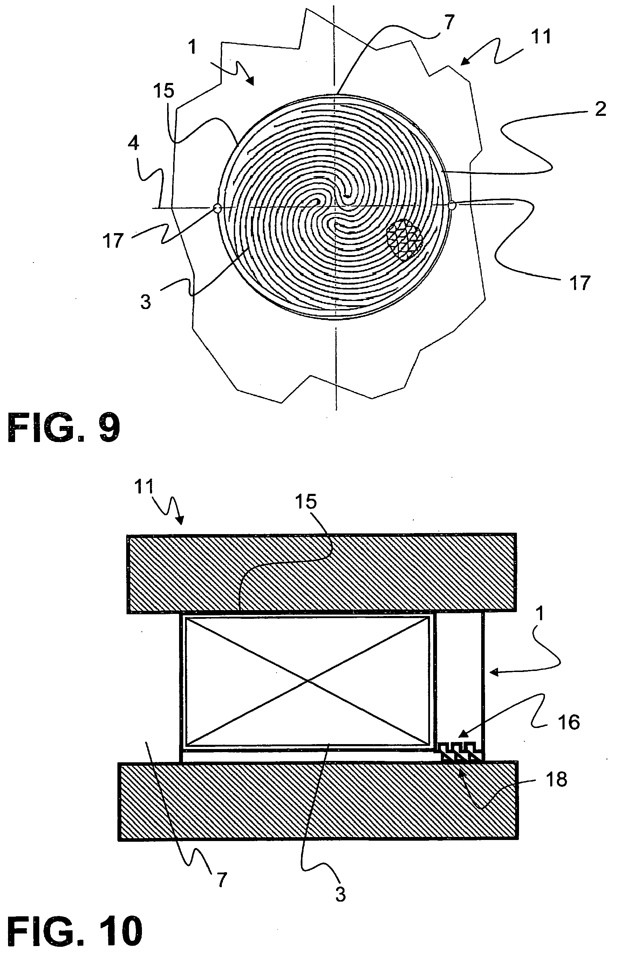

Fig. 9 zeigt in Draufsicht auf eine Öffnungsseite 2 den Querschnitt 6 einer Abgasbehandlungseinheit 1 eingeschoben in eine abgasführende Leitung 7 in einer Verbrennungskraftmaschine 11. Hierbei sind beispielhaft zwei Verstemmungspunkte 17 dargestellt, die ein Herauslösen der Abgasbehandlungseinheit 1 verhindern.

Fig. 10 zeigt in der Seitenansicht eine nicht erfindungsgemäße Abgasbehandlungseinheit 1 eingeschoben in eine abgasführende Leitung 7 in der Verbrennungskraftmaschine 11. Hierbei weist die Abgasbehandlungseinheit 1 ein abgesetztes Verbindungsmittel mit einer Formstruktur 16 auf. Diese Formstruktur 16 ist formschlüssig in die entsprechende Leitungsstruktur 18 eingerastet. Das Gehäuse 15 liegt über den gesamten Umfang an der abgasführenden Leitung 7 an, weist jedoch im Bereich der Formstruktur 16 eine Einkerbung auf, damit die Abgasbehandlungseinheit 1 über die Leitungsstruktur 18 im Bezug auf die bildliche Darstellung von rechts nach links eingeführt werden kann.

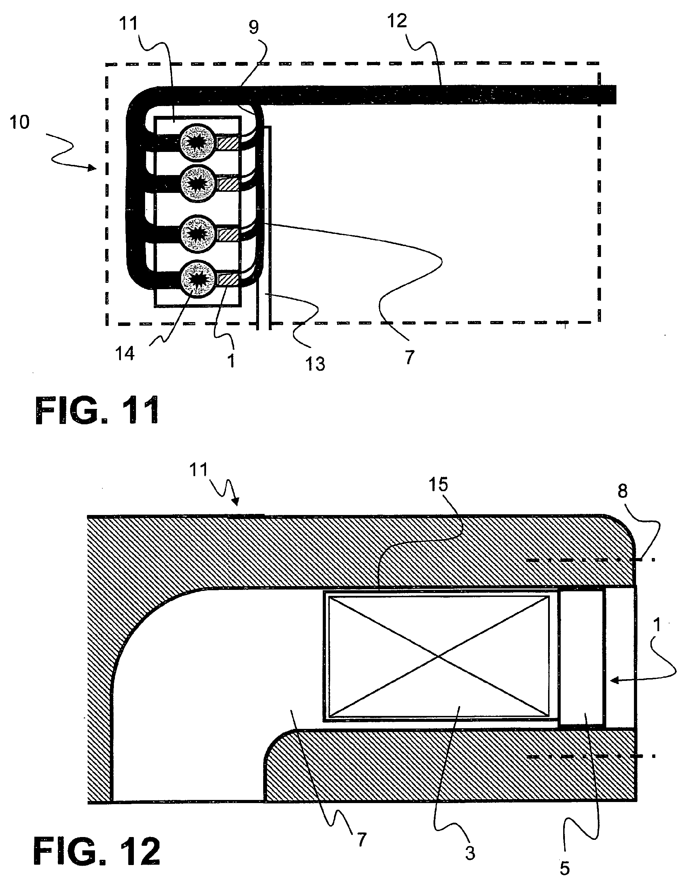

Fig. 11 zeigt ein Kraftfahrzeug 10 mit einer Verbrennungskraftmaschine 11. Die Verbrennungskraftmaschine 11 weist eine Abgasleitung 12 auf, die von der Brennkammer 14 nach außen führt. Weiterhin umfasst die Verbrennungskraftmaschine 11 eine Luftleitung 13, die von außen der Brennkammer Luft zuführt. Diese ist ergänzt durch eine abgasführende Leitung 7, die Abgase aus der Abgasleitung 12 über die Abgasrückführleitung 9 in Vermischung mit Luft aus der Luftleitung 13 in die Brennkammer 14 zurückführt. Bevor dieses Abgas-Luft-Gemisch in die Brennkammer 14 eintreten kann, wird es durch die vorgeschalteten Abgasbehandlungseinheiten 1 gereinigt.

Fig. 12 zeigt die Anordnung der Abgasbehandlungseinheit 1 in der Verbrennungskraftmaschine 11 bzw. der abgasführenden Leitung 7 im Detail. Durch den Abstand zwischen der Abgasbehandlungseinheit 1 und der abgasführenden Leitung 7 ist zu erkennen, dass lediglich die Quetschzone 5, nicht aber der Abgasbehandlungskörper 3, mit der abgasführenden Leitung in Kontakt stehen kann, dies ist aber nicht zwingend erforderlich. Vielmehr kann eine (plastische) Deformierung der Quetschzone 5 in der Art eintreten, dass auch der restliche Bereich des Gehäuses 15 (teilweise) deformiert ist. In der Fig. 12 ist die Abgasbehandlungseinheit 1 in der Ausführungsform der Fig. 3 zugrunde gelegt. Es ist zu erkennen, dass die Quetschzone 5 im Einbau deformiert ist. Darüber ist eine kraftschlüssige Verbindung sichergestellt. Der in der Fig. 12 gezeigte Abschnitt der abgasführenden Leitung 7 kann beispielsweise ein Abschnitt eines Zylinderkopfs einer Verbrennungskraftmaschine 11 sein. Die Abgasrückführleitung 9 (nicht dargestellt) kann hier mittels der schematisch dargestellten Befestigungsmittel 8 (strichpunktierte Linien) derart montiert werden, dass keine Haltevorrichtung für eine erfindungsgemäße Abgasbehandlungseinheit 1 dazwischen angeordnet sein muss.

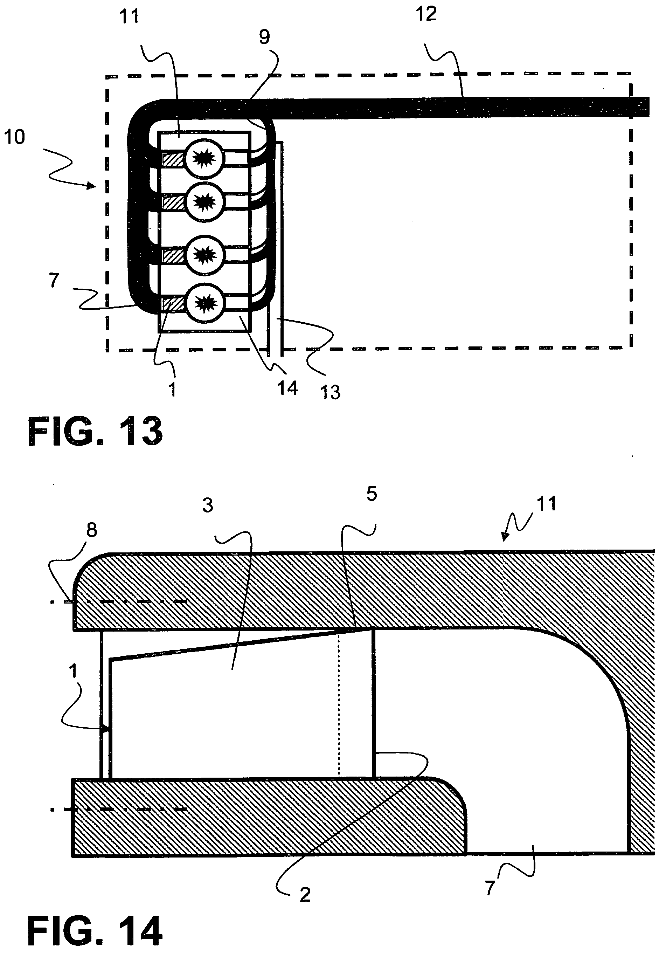

Fig. 13 zeigt ein Kraftfahrzeug 10 mit einer Verbrennungskraftmaschine 11 entsprechend der Darstellung in Fig. 11. Abweichend von Fig. 11 sind die Abgasbehandlungseinheiten 1 in Strömungsrichtung des Abgases gesehen (direkt) nachfolgend den Brennkammern 14 angeordnet. Somit wird das Abgas bereits direkt nach der Verbrennung gereinigt.

Fig. 14 zeigt die Anordnung der Abgasbehandlungseinheit 1 in der abgasführenden Leitung 7 im Detail. Hier wurde die Abgasbehandlungseinheit 1 aus Fig. 5 zugrunde gelegt. Hierbei ist noch deutlicher zu erkennen, dass vorrangig die Quetschzone 5 und nicht der Abgasbehandlungskörper 3 deformiert wurde. Hierbei ist die Öffnungsseite 2 zugleich die Eintrittsseite des zu reinigenden Abgases aus der abgasführenden Leitung 7. Da auf dieser Seite die höchsten thermischen und durch die Pulsation mechanischen Lasten zu erwarten sind, scheint diese Anordnung besonders sinnvoll, ist aber nicht zwingend notwendig. Auch in dieser anordnung ist zu erkennen, dass die Abgasleitung 12 bzw. ein Abgaskrümmer an dem Zylinderkopf der Verbrennungskraftmaschine 11 ohne weitere Zwischen stücke mittels der schematisch dargestellten Befestigungsmittel 8 (strichpunktierte Linien) befestigt werden kann. Dadurch wird unter anderem die Anzahl der Passflächen und Dichtflächen reduziert.

Damit löst die Erfindung zumindest teilweise die im Zusammenhang mit dem Stand der Technik geschilderten technischen Probleme. Insbesondere wurde eine Vorrichtung vorgeschlagen, die ohne äußere Haltemittel in einer abgasführenden Leitung fest positioniert werden kann. Damit wird unter anderem die Montage vereinfacht und die Flexibilität der Anordnung der Abgasbehandlungseinheit erhöht.

### Bezugszeichenliste

1 Abgasbehandlungseinheit
2 Öffnungsseite
3 Abgasbehandlungskörper
4 Hauptachse
5 Quetschzone
6 Querschnitt
7 abgasführende Leitung
8 Befestigungsmittel
9 Abgasrückführleitung
10 Kraftfahrzeug
11 Verbrennungskraftmaschine
12 Abgasleitung
13 Luftleitung
14 Brennkammer
15 Gehäuse
16 Formstruktur
17 Verstemmungspunkt
18 Leitungsstruktur

## Patentansprüche

1. Abgasbehandlungseinheit (1), aufweisend einen im Wesentlichen zylindrischen Abgasbehandlungskörper (3) mit einer Hauptachse (4), einem Gehäuse (15) und an zumindest einer Öffnungsseite (2) der Abgasbehandlungseinheit (1) zumindest das folgende Verbindungsmittel:
eine abgesetzte Quetschzone (5), die die Aufgabe des kraftschlüssigen Verbindens mit einer abgasführenden Leitung (7) übernimmt und die derart abgesetzt ist, dass kein oder nur ein geringer Verformungseinfluss auf den Abgasbehandlungskörper (3) und demnach nur bei einem Abschnitt des Gehäuses (15) stattfinden kann, wobei die Quetschzone (5) gegenüber dem Rest der Abgasbehandlungseinheit (1) ein Übermaß zum Bilden einer Presspassung aufweist, wobei die Quetschzone (5) so gestaltet ist, dass sich diese nach innen verformt, wobei die Quetschzone (5) sowohl elastischer als auch plastischer Verformung unterliegt, und wobei weiterhin die Ouetschzone (5) in einem axialen Abschnitt des Gehäuses (15) gebildet ist, der nicht mit dem Abgasbehandlungskörper (3) gefüllt ist.

2. Abgasbehandlungseinheit (1) nach Patentanspruch 1, wobei das Verbindungsmittel einen von dem im Wesentlichen zylindrischen Abgasbehandlungskörper (3) abweichenden Querschnitt (6) aufweist.

3. Abgasbehandlungseinheit (1) nach Patentanspruch 1 oder 2, wobei das Verbindungsmittel gegenüber der Hauptachse (4) exzentrisch angeordnet ist.

4. Abgasbehandlungseinheit (1) nach einem der vorhergehenden Patentansprüche, wobei das Gehäuse (15) und das zumindest eine Verbindungsmittel einstückig ausgeführt sind.

5. Verbrennungskraftmaschine (11) mit zumindest einer Abgasbehandlungseinheit (1) nach einem der vorhergehenden Ansprüche, aufweisend zumindest eine abgasführende Leitung (7) und zumindest eine Abgasbehandlungseinheit (1), die in die zumindest eine abgasführende Leitung (7) vollständig eingeführt ist.

6. Verbrennungskraftmaschine (11) nach Patentanspruch 5, wobei die zumindest eine Abgasbehandlungseinheit (1) kraftschlüssig mit der abgasführenden Leitung (7) fest positionierbar ist.

7. Verbrennungskraftmaschine (11) nach Patentanspruch 5 oder 6, wobei die Abgasbehandlungseinheit (1) durch Verstemmen zumindest einseitig fixiert ist.

8. Kraftfahrzeug (10) aufweisend eine Verbrennungskraftmaschine (11) mit zumindest einer Abgasbehandlungseinheit (1) nach einem der vorhergehenden Patentansprüche 5 bis 7.

## Claims

1. Exhaust-gas treatment unit (1), having a substantially cylindrical exhaust-gas treatment body (3) with a main axis (4), a housing (15) and having, on at least one opening side (2) of the exhaust-gas treatment unit (1), at least the following connecting means:
an offset pinch zone (5), which performs the task of the non-positive connection to an exhaust-gas-conducting line (7) and which is offset such that no or only a minor deformation influence can be exerted on the exhaust-gas treatment body (3), and accordingly only in one portion of the housing (15), wherein the pinch zone (5) has an oversize in relation to the rest of the exhaust-gas treatment unit (1) for forming an interference fit, wherein the pinch zone (5) is designed such that it deforms inward, wherein the pinch zone (5) may undergo both elastic and also plastic deformation, and wherein further the pinch zone (5) is formed in an axial portion of the housing (15), which is not filled with the exhaust-gas treatment body (3).

2. Exhaust-gas treatment unit (1) as claimed in claim 1, wherein the connecting means has a cross section (6) which differs from the substantially cylindrical exhaust-gas treatment body (3).

3. Exhaust-gas treatment unit (1) as claimed in claim 1 or 2, wherein the connecting means is arranged eccentrically with respect to the main axis (4).

4. Exhaust-gas treatment unit (1) as claimed in one of the preceding claims, wherein the housing (15) and the at least one connecting means are formed in one piece.

5. Internal combustion engine (11) with at least one exhaust-gas treatment unit (1) as claimed in one of the preceding claims, having at least one exhaust-gas-conducting line (7) and having at least one exhaust-gas treatment unit (1) which is inserted entirely into the at least one exhaust-gas-conducting line (7).

6. Internal combustion engine (11) as claimed in claim 5, wherein the at least one exhaust-gas treatment unit (1) can be positioned fixedly with the exhaust-gas-conducting line (7) in a non-positively locking manner.

7. Internal combustion engine (11) as claimed in claim 5 or 6, wherein the exhaust-gas treatment unit (1) is fixed at least at one side by calking.

8. Motor vehicle (10) with an internal combustion engine (11) having at least one exhaust-gas treatment unit (1) as claimed in one of the preceding claims 5 to 7.

## Revendications

1. Unité de traitement de gaz d'échappement (1), présentant un corps de traitement de gaz d'échappement essentiellement cylindrique (3) avec un axe principal (4), une enceinte (15) et sur au moins un côté d'ouverture (2) de l'unité de traitement de gaz d'échappement (1), le moyen de liaison suivant:
une zone de serrage décalée (5), qui assure la fonction de l'assemblage par adhérence avec une conduite transportant des gaz d'échappement (7) et qui est décalée de telle manière, qu'il ne puisse se produire aucune ou seulement une faible influence de déformation sur le corps de traitement de gaz d'échappement (3) et par conséquent uniquement dans une partie de l'enceinte (15), dans laquelle la zone de serrage (5) présente par rapport au reste de l'unité de traitement de gaz d'échappement (1) une surcote destinée à former un ajustement serré, dans laquelle la zone de serrage (5) est configurée de telle manière qu'elle se déforme vers l'intérieur, dans laquelle la zone de serrage (5) subit une déformation aussi bien élastique que plastique, et dans laquelle la zone de serrage (5) est en outre formée dans une partie axiale de l'enceinte (15), qui n'est pas remplie avec le corps de traitement de gaz d'échappement (3).

2. Unité de traitement de gaz d'échappement (1) selon la revendication 1, dans laquelle le moyen de liaison présente une section transversale (6) s'écartant du corps de traitement de gaz d'échappement essentiellement cylindrique (3).

3. Unité de traitement de gaz c'échappement (1) selon la revendication 1 ou 2, dans laquelle le moyen de liaison est disposé de façon excentrique par rapport à l'axe principal (4).

4. Unité de traitement de gaz d'échappement (1) selon l'une quelconque des revendications précédentes, dans laquelle l'enceinte (15) et ledit au moins un moyen de liaison sont réalisés d'une seule pièce.

5. Moteur à combustion interne (11) avec au moins une unité de traitement de gaz d'échappement (1) selon l'une quelconque des revendications précédentes, présentant au moins une conduite (7) transportant des gaz d'échappement et au moins une unité de traitement de gaz d'échappement (1), qui est introduite entièrement dans ladite au moins une conduite transportant des gaz d'échappement (7).

6. Moteur à combustion interne (11) selon la revendication 5, dans lequel ladite au moins une unité de traitement de gaz d'échappement (1) peut être positionnée de façon fixe par adhérence avec la conduite transportant des gaz d'échappement (7).

7. Moteur à combustion interne (11) selon la revendication 5 ou 6, dans lequel l'unité de traitement de gaz d'échappement (1) est fixée au moins d'un côté par matage.

8. Véhicule automobile (10) présentant un moteur à combustion interne (11) avec au moins une unité de traitement de gaz d'échappement (1) selon l'une quelconque des revendications 5 à 7.
